# EUROPEAN PATENT APPLICATION

(11) **EP 1 480 131 A2**
(43) Date of publication of application: **24.11.2004**
(21) Application number: 04010799.7
(22) Date of filing: 06.05.2004
(51) Int. Cl.: G06F 17/30

(54) **Post-cache substitution of blocks in cached content**

(30) Priority: 23.05.2003 US 444834
(71) Applicant: MICROSOFT CORPORATION, Redmond, WA 98052 (US)
(72) Inventor: Millington, Bradley D., Bellevue Washington 98005 (US); Robsman, Dmitry, Bellevue Washington 98008 (US)
(74) Representative: Grünecker, Kinkeldey, Stockmair & Schwanhäusser Anwaltssozietät

(57) **Abstract**

Systems and methods for post-cache substitution. To include dynamic content in a response to a client request, a substitution block is inserted in the cached content. When the cached content is written as the response to the client, a delegate associated with the substitution block is invoked to generate the dynamic content. Each time the content is requested the delegate is invoked and the content served in the response to the client request includes dynamic content that could be different from one client request to the next client request for the cached content.

## Description

### The Field of the Invention

The present invention relates in general to systems and methods for post-cache substitution. More particularly, the present invention relates to systems and methods for inserting dynamic content in a web page that is output cached.

### Background and Relevant Art

With the increasing ease of access to the Internet and the wealth of knowledge and information available through the Internet, individuals and business entities are beginning to use the Internet as a primary source for retrieving and accessing information relating, for example, to world affairs, education, and entertainment. Disseminating information to a large number of individuals is becoming increasingly easier through faster personal computers, improved servers, and better communication networks.

Information repositories, such as web servers and databases, are accessible to a user through the use of a web browser. The web browser operates on the user's computer and retrieves and displays web pages from various servers connected to a computer network (such as the Internet) either directly or by way of one or more intermediate proxy servers. A web browser can also be used to retrieve and display other types of content over the Internet or over other computer networks.

Because server computers are being accessed by many users, requiring a particular server to generate a web page for each user request can significantly affect the performance of the server in responding to the user requests. Data caching techniques shorten the response time observed by users between requesting a web page and the web browser serving the page to the user. Data caching techniques also improve the performance of the server, allowing the server to respond to more requests per unit of time. These data caching techniques store a static version of a web page into a data cache at any number of locations between the end user's computer and the web server that generates the response to the web page request, including the user's computer and the web server. Data caching technologies thereby permit server computers that are accessed over, for example, the Internet to provide a large numbers of users with the same web page in a relatively short amount of time.

For example, a web browser typically has access to a local cache that stores temporary files retrieved over a network while the web browser is used. When a web page is requested, the browser checks to see if a copy of the requested web page exists in the local cache. In the event that the cache stores an up to date version of the requested web page, the web browser may retrieve the requested web page from the local cache, thereby eliminating the need to request the web page directly from the web server. Because the cache is typically located locally upon a hard drive of a user's computer or in the volatile memory of the user's computer, no network communication is needed to retrieve the web page. A locally cached web page results in a response that is typically much quicker than sending a request over the Internet. In addition, the use of a cached web page from a local cache eliminates unnecessary web server hits that reduce the processing efficiencies of the web servers.

Web servers including proxy web servers also employ caching technologies. When a web server receives a request for a web page from a user, the web server determines whether the web page requested by the user is stored in the web server's cache before attempting to generate the requested web page. If the web page is in the web server's cache, then the response of the web server to the user includes the cached web page. The web server's cache thus reduces the processing requirements of the web server, which would otherwise perform the process of creating the web page if the web page is not cached. This can be computationally expensive or may simply take more time as the creation of the web page may require, for example, the web server to wait for a database server to respond to a database query.

A web server cache permits the web server to spend more time serving web pages instead of generating the web pages. One drawback of cached web pages is that the content of the cached web pages is static and cached web pages that are static do not always maximize server efficiencies and may not contain the most current content. In addition, cached web pages do not vary from one request to the next request. In some instances, the revenue that is generated from serving web pages may also be reduced because the cached web pages or other content is static and it becomes difficult to server different ads for each request because the cache content is static.

For example, web pages often include advertisements that should change each time a particular web page is served. Changing the advertisement for each request is a difficult task when the web page is served from a static cache. In other words, the cached web page does not change from one request to the next because it has already been created by the web server. Overcoming this problem requires complicated coding of the dynamic content and the web page served to the web browser to force the web browser or intermediate proxy server to obtain new dynamic content for the cached web page.

One approach to this problem is to partially cache a web page. In this approach, some regions of a web page are marked as dynamic while other regions of the web page are marked as static. Regions that are marked as dynamic are executed on each request while regions marked as static or cached are executed only once and are cached until a specific dependency is enforced. This approach, however, is intended for situations where most of the content of the web page is dynamic. The dynamic content typically often remains in the parent page or is contained in user controls without cache directives. With this approach, the page is still executed on every request and its success depends on hand-coding each page and on splitting the pate into dynamic and static parts. Hand-coding pages in this manner is time consuming and error prone.

### BRIEF SUMMARY OF THE INVENTION

These and other limitations are overcome by the present invention, which relates to systems and methods for post-cache substitution. Post-cache substitution enables developers to output cache entire web pages and then identify regions of the cached web page that are exempt from caching. Using post-cache substitution, dynamic content can be generated for each user request even if the parent page is cached. In one embodiment, a page developer is relieved for coding a web page as the present invention may be provided as a control.

A cached web page is typically stored as a chain of response buffers. Post-cache substitution uses a substitution block that is inserted in the normal chain of response buffers. In one embodiment, the substitution block is a delegate that produces dynamic content when the delegate is invoked. When a cached web page is requested and the stored chain of response buffers is written, the substitution block causes a delegate to be invoked that generates new content for the web page. Each time the cached web page is requested, the delegate is re-invoked to generate new content. This permits new content to be inserted in a cached web page. Advantageously, a developer is not required to mark page regions as cached or make any other changes related to how a particular web page may function.

Post-cache substitution can be implemented using user code or using server controls. Be associating a specific region of a cached page with a callback delegate, dynamic content may be inserted into a static output cached web page. When user code is implemented, the callback method can be, for example, a static method on a page (or user control), or an instance method on another arbitrary object. When server controls are used, a property of the server is typically set to a static method on the control's containing page. In one embodiment, the user is not required to provide or supply any delegates and post-cache substitution can be provided in a control automatically.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention cam be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 illustrates an example of a system that implements post-cache substitution;
Figure 2 illustrates an example of content that is served from cache and that includes dynamic content;
Figure 3 illustrates a chain of response buffers in a cache that corresponds to requested content and illustrates a delegate associated with a substitution block that generates new content;
Figure 4 illustrates one embodiment of a server system that inserts dynamic content in cached content;
Figure 5 is a flow diagram for one embodiment of a method for serving dynamic content in cached content; and
Figure 6 illustrates an exemplary system that provides a suitable operating environment for the present invention.

### DETAILED DESCRIPTION OF THE PREFERRED EMBODIMENTS

The present invention extends to both methods and systems for inserting dynamic content in a static output-cached content such as output cached web pages and is referred to in one embodiment, as post-cache substitution. One advantage of post-cache substitution is the ability to improve the development experience. Rather than requiring page developers to mark page regions (user controls) as cached or write custom code on each page to cache data, the present invention permits a web page to be output cached. Next, portions of the output cached web page are identified as being exempt from caching and new content is generated for the identified portions each time the web page is requested and served from cache.

Post-cache substitution uses a substitution block that is inserted in a typical chain of response buffers. When the chain of response buffers is written as a response to a user request, the substitution block causes a callback delegate to be invoked. The delegate generates the actual content that is included in the response to the user request. Each time the cached web page is served, the delegate(s) associated with the substitution block(s) are invoked to produce the dynamic content that is inserted into the response. Thus, dynamic content can be included in static output cached web pages.

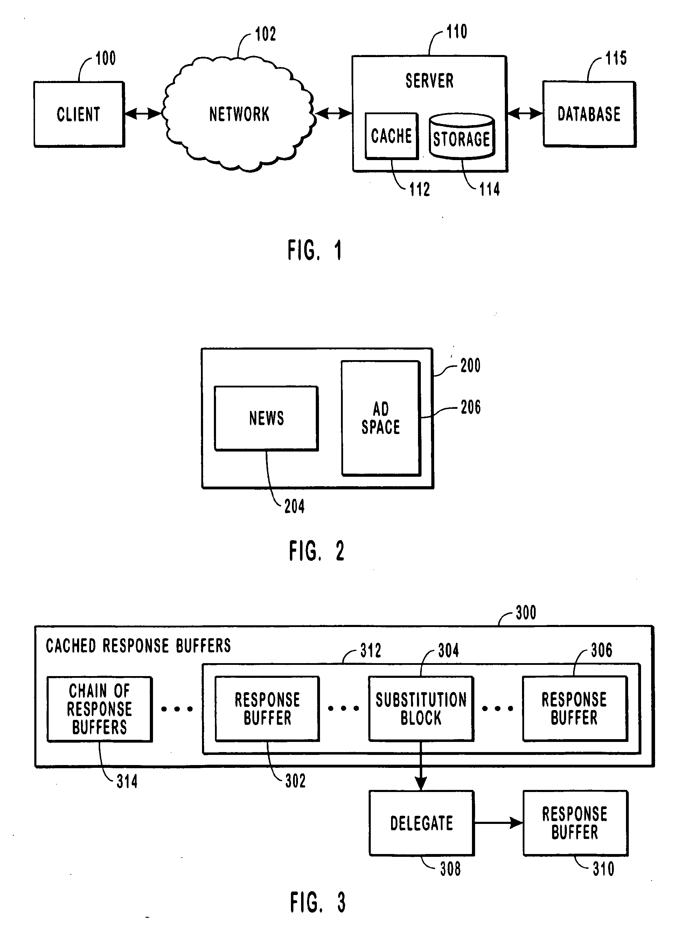

Figure 1 illustrates an exemplary environment for implementing embodiments of the present invention. Figure 1 illustrates a client 100 and a server 110 that communicate over a network 102. The network 102 may be, for example, a local area network, a wide area network, the Internet, or any combination thereof. The network 102 may also include wireless and/or wired networks. In this example, the content requested by the client 100 is a web page. The client 100 typically uses browser software to request web pages from the server 110 and the server 110 serves web pages to the client 100 over the network 102.

When the server 110 receives a request for a web page from the client 100, the server 110 typically checks to determine whether the web page is already stored in the cache 112. If the web page is stored in the cache 112, then the cached version of the web page is served to the client 100. If the web page is not stored in the cache 112, then the server 110 typically generates the web page, serves the web page to the client 100, and, if the page is marked as cacheable, stores the web page in the cache 112 for future client requests.

As previously mentioned, the server 110 typically prefers to serve web pages from the cache 112 for efficiently reasons. When the server 110 must generate the web page, the server 112 may be required to access the storage 114, the database 115, and/or other sources in order to generate the requested web page. These operations can be computationally expensive, blocking (e.g., taking time waiting to complete a database query), or resource expensive (e.g. requiring a large amount of memory to generate a web page), and may decrease the ability of the server 110 to respond to requests from other clients. In addition, the response time of the server 110 may also be lengthened. The cache 112 enables the server 110 to serve web pages more efficiently.

Figure 2 is an example of a web page that may be served by a server. The web page 200 may include news 204 and an ad space 206. The news 204 does not change frequently. Thus, it is in the interest of the server to cache these portions of the web page 200. Each portion of the web page 200 can have a caching policy that governs when the cached data should expire. The news 204, for example, may expire every 20 minutes. This does not place an undue burden on the server. However, the server would like to place a new ad in the ad space 206 each time the web page 200 is served. The present invention permits a developer to associate, for example, the ad space 206 with a callback delegate that is used to generate dynamic content for the ad space 206 while caching the entire web page 200. Advantageously, the server is not required to generate the web page 200 each time that the web page 200 is requested while permitting the server to insert dynamic content for each request for the web page 200.

Figure 3 illustrates how the web page 200 of Figure 2 may be represented in cache. In this example, the cache of a web server can be represented as a series of response buffer chains 314 and 315, although one of skill in the art can appreciate that the cache of a web server can be represented in other manners and configurations. Each chain of response buffers typically corresponds, in this example, to a particular web page or other content that may be requested by a client. The chain of response buffers 314 corresponds to a first web page and the chain of response buffers 312 corresponds to a second web page.

In this example, the cache maintained by the server is output cached. Output cached indicates, in this embodiment, that the response buffers contain HTML data. In contrast, data caching indicates that the HTML has not yet been created but that the data is cached. The present invention can be applied to these and other types of cached data.

Figure 3 further illustrates a chain of response buffers 312 that includes a response buffer 302, a substitution block 304 and a response buffer 306. The number of response buffers in a particular chain of response buffers can vary and is related to the web page or other content requested by a client. The substitution block 304 is a placeholder buffer than is inserted in the chain of response buffers 312. When the chain of response buffers 312 are written back to the client as the response to the request, the substitution block 304 invokes a delegate 308 to produce the response buffer 310 or other content that is written or sent to the client. The substitution block permits the generation of dynamic content each time the page is requested. One typical application is to insert a new advertisement in the ad space 206 of the web page 200 (see Figure 2) each time that the web page 200 is requested.

In the example of Figure 3, the chain of response buffers 312 represents a web page that is output cached. The entire web page is cached and a substitution block has been included with the response buffers. The substitution block identifies the portion of the web page that is exempt from caching. This permits dynamic content to be produces at designated locations within the cached response as illustrated in Figure 3.

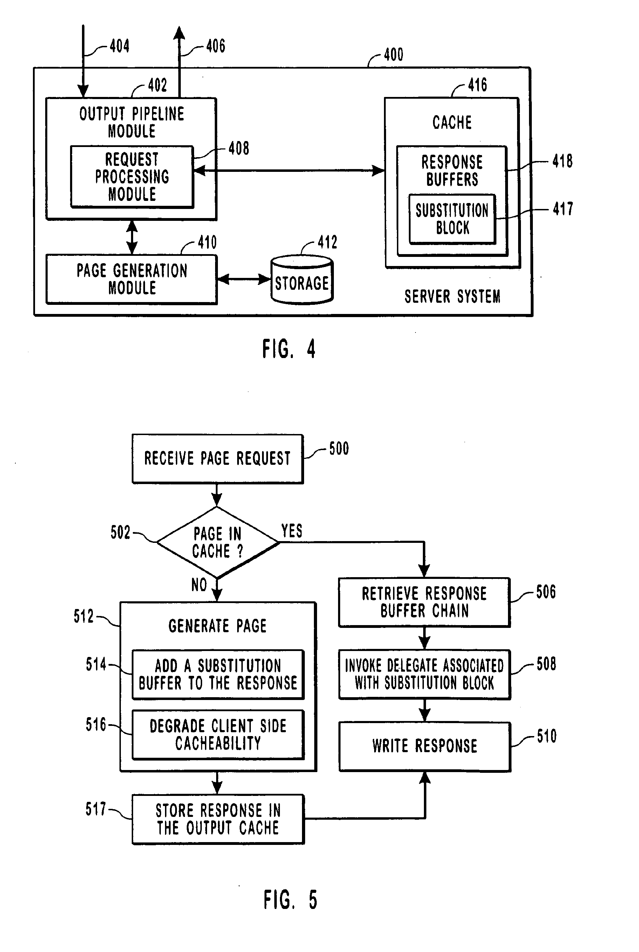

Figure 4 illustrates an example of a server system 400 that is able to generate dynamic content for cached web pages. The server system 400 receives a request 404 for content from a client. In this example, the content requested by the client is a web page. The output pipeline module 402 receives the request 404 and the output pipeline module 402 typically includes several modules for handling the request 404. These modules process the request 404 to generate an appropriate response from the server system 400. In one embodiment, the modules operate successively. For example, the modules may include an authentication module that determines is the request 404 is from a known client and if the client is entitled to access the requested page. If the user is not recognized, the response typically indicates that access is denied and successive modules in the output pipeline module 402 do not need to handle the request 404. Other modules may, for example, maintain a log of incoming requests being processed, resolve query translations to map the incoming URL in the request to the requested content, determine if the user is authorized, and the like.

Another module is a request processing module 408 that is used to determine if the web page identified in the request 404 is stored in the cache 416. If the web page requested by the client is stored in the cache 416, the request processing module 408 accesses the cache 416 to retrieve the response buffers 418 that correspond to the web page requested by the client in the request 404. When the substitution block 417 is recognized by the request processing module 408, the delegate associated with the substitution block 417 is invoked as previously described and new content is generated and included in the response 406 in place of the substitution block 417. If the web page is not in the cache 416, then the page generation module 410 accesses the storage 412 (which may include, for example, local and/or remote data sources) to build the web page requested by the client. In both cases, the request processing module 408 then serves the response 406 to the client. The cache 416 contains static data and the substitution block 417 causes new or dynamic content to be inserted into the response 406 in place of the substitution block 417.

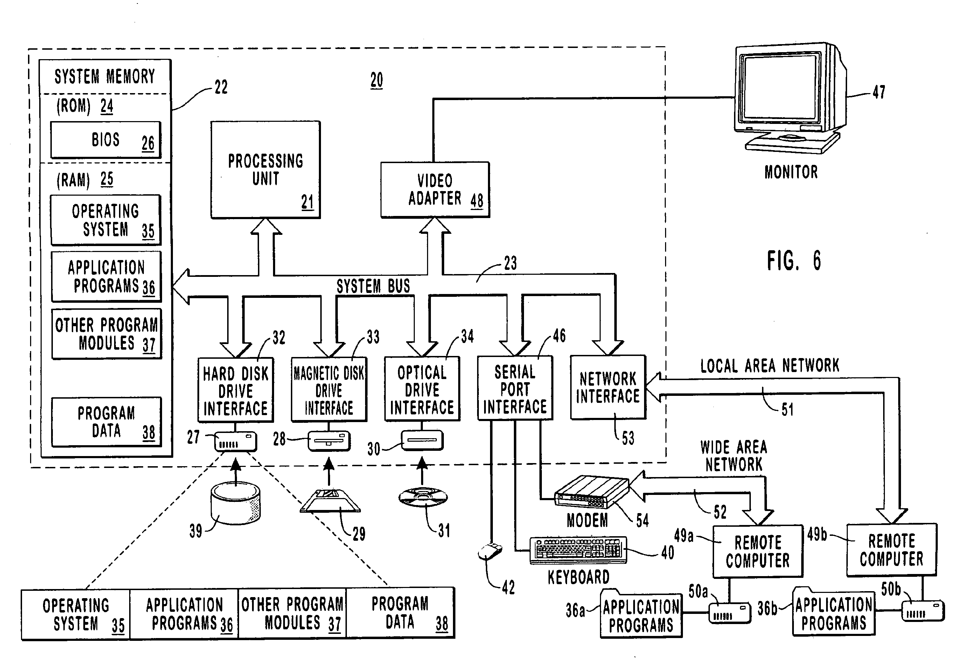

Figure 5 is a flow diagram that more fully illustrates post-cache substitution or the ability to insert dynamic content in static cached content. The server system receives a page request (500) or other request for content from a client. A determination is made as to whether the page is in the cache (502) of the server system. If the page is in the cache, then the response buffer chain is retrieved (506) from the cache. Next, the delegate associated with a substitution block in the response buffer chain is invoked (508) to generate the content to be included in the response in place of the substitution block along with the other response buffers. Finally, the server system writes the response (510) to the client.

If the page is not in the cache (502), then the server system generates the page (512). As the page is generated (512), a substitution block is typically added to the chain of response buffers that make up the cached page (514). Also, the client side cache ability is degraded (516) from public to server only such that the page is not cached on the client as the page is generated. This ensures that future requests for the page re-invoke the delegate associated with the substitution block to generate new content. After the page is generated, the response may be output cached (if appropriate) in the cache of the server system (517) and the response is written or sent to the client (510).

Post-cache substitution provides several advantages to page developers that simplify the development of output cached web pages. For example, a developer can write a method with a prescribed callback signature that takes a single context parameter and returns a string, which is the content to substitute at a given location. The developer then calls "Response.WriteSubstitution" and passes the callback method as a parameter. The callback method can either be a static method on the containing page or UserControl, or a static or instance method on another arbitrary object. The callback method should be thread-safe as it might be invoked simultaneously from several threads if several requests for the same cached page arrive at the same time. The following example illustrates the usage of "Response.WriteSubstitution."

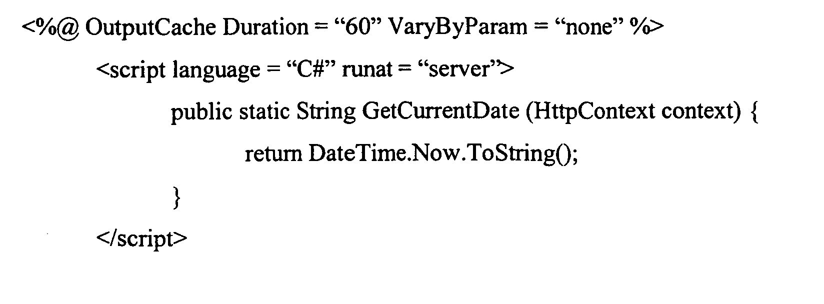

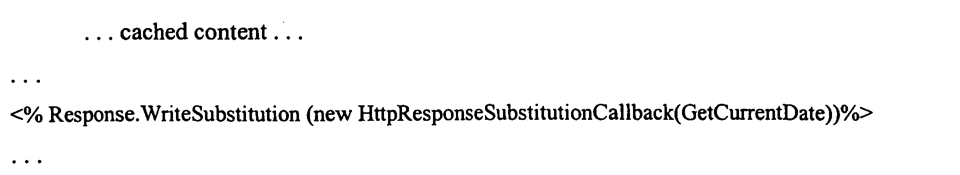

On the initial request for a web page, a substitution block with the associated delegate is added or included in the requested page. Then, after the page is generated but before the page is served to the client, WriteSubstitution calls the HttpResponseSubstitutionCallback delegate to produce the output for the page. The request processing module then stores the chain of response buffers that are retrieved for future requests. On subsequent requests for the web page, the request processing module intercepts the request and retrieves the associated response buffers than includes the substitution block. When writing the substitution block, the delegate is invoked to produce the dynamic content that is then written to or included in the response to the client.

In another example, a developer can insert a Substitution server control at the page location where the content should be substituted and set the MethodName property to the callback method. Unlike Response.WriteSubstitution, which can accept a callback method on an arbitrary object, the Substitution server control's MethodName property is set to a static method on the control's containing Page or UserControl. The following example illustrates the usage the Substitution Server control.

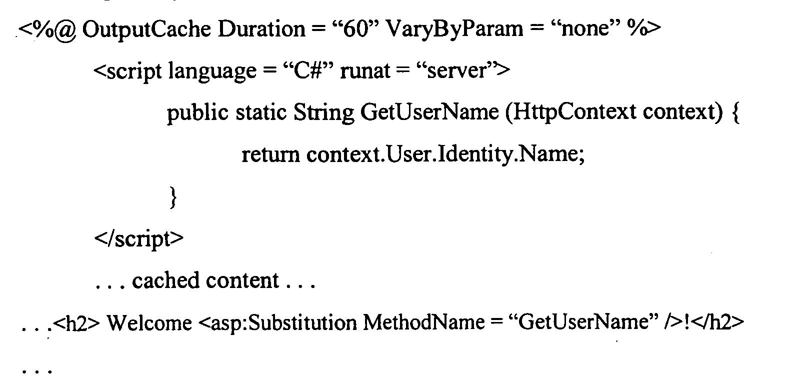

Another advantage of the present invention is that it can be used to generate dynamic content even if the parent page is not cached. Typically, post-cache substitution is accessed by developers through the use of other server controls that support post-cache-substitution. This is convenient for developers who can take advantage of post-cache substitution through the use of these controls.

The embodiments of the present invention may comprise a special purpose or general-purpose computer including various computer hardware, as discussed in greater detail below. The computer may be a client computer or a server computer. When the computer is a server computer, some of the components illustrated in Figure 6 are not always necessary. A server computer, for example, does not typically require a monitor, floppy disk, or serial port in order to operate. Thus, Figure 6 illustrates one embodiment of a suitable computing environment. Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

Figure 6 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

With reference to Figure 6, an exemplary system for implementing the invention includes a general purpose computing device in the form of a conventional computer 20, including a processing unit 21, system memory 22, and a system bus 23 that couples various system components including the system memory 22 to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help transfer information between elements within the computer 20, such as during start-up, may be stored in ROM 24.

The computer 20 may also include a magnetic hard disk drive 27 for reading from and writing to a magnetic hard disk 39, a magnetic disk drive 28 for reading from or writing to a removable magnetic disk 29, and an optical disk drive 30 for reading from or writing to removable optical disk 31 such as a CD-ROM or other optical media. The magnetic hard disk drive 27, magnetic disk drive 28, and optical disk drive 30 are connected to the system bus 23 by a hard disk drive interface 32, a magnetic disk drive-interface 33, and an optical drive interface 34, respectively. The drives and their associated computer-readable media provide nonvolatile storage of computer-executable instructions, data structures, program modules and other data for the computer 20. Although the exemplary environment described herein employs a magnetic hard disk 39, a removable magnetic disk 29 and a removable optical disk 31, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk 39, magnetic disk 29, optical disk 31, ROM 24 or RAM 25, including an operating system 35, one or more application programs 36, other program modules 37, and program data 38. A user may enter commands and information into the computer 20 through keyboard 40, pointing device 42, or other input devices (not shown), such as a microphone, joy stick, game pad, satellite dish, scanner, or the like. These and other input devices are often connected to the processing unit 21 through a serial port interface 46 coupled to system bus 23. Alternatively, the input devices may be connected by other interfaces, such as a parallel port, a game port or a universal serial bus (USB). A monitor 47 or another display device is also connected to system bus 23 via an interface, such as video adapter 48. In addition to the monitor, personal computers typically include other peripheral output devices (not shown), such as speakers and printers.

The computer 20 may operate in a networked environment using logical connections to one or more remote computers, such as remote computers 49a and 49b. Remote computers 49a and 49b may each be another personal computer, a server, a router, a network PC, a peer device or other common network node, and typically include many or all of the elements described above relative to the computer 20, although only memory storage devices 50a and 50b and their associated application programs 36a and 36b have been illustrated in Figure 6. The logical connections depicted in Figure 6 include a local area network (LAN) 51 and a wide area network (WAN) 52 that are presented here by way of example and not limitation. Such networking environments are commonplace in office-wide or enterprise-wide computer networks, intranets and the Internet.

When used in a LAN networking environment, the computer 20 is connected to the local network 51 through a network interface or adapter 53. When used in a WAN networking environment, the computer 20 may include a modem 54, a wireless link, or other means for establishing communications over the wide area network 52, such as the Internet. The modem 54, which may be internal or external, is connected to the system bus 23 via the serial port interface 46. In a networked environment, program modules depicted relative to the computer 20, or portions thereof, may be stored in the remote memory storage device. It will be appreciated that the network connections shown are exemplary and other means of establishing communications over wide area network 52 may be used.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. In a system that has a server that serves content in response to client requests from a cache of the content, a method for inserting dynamic content in the cached content when the cached content is served to a client, the method comprising:
receiving a request from a client for content;
retrieving a chain of response buffers that includes a substitution block with a delegate from a cache, wherein the chain of response buffers corresponds to the content requested by the client; and
invoking the delegate associated with the substitution block that generates dynamic content that is included in the chain of response buffers served in a response to the client request.

2. A method as defined in claim 1, further comprising serving the content including the content including the dynamic content in the response to the client.

3. A method as defined in claim 1, wherein receiving a request from a client for content further comprises determining if the content requested by the client is stored in the cache.

4. A method as defined in claim 3, wherein determining if the content requested by the client is stored in the cache further comprises generating the content if the content is not stored in the cache.

5. A method as defined in claim 4, wherein generating the content if the content is not stored in the cache further comprises:
adding the substitution block to the response;
storing the response including the substitution block in the cache; and
degrading a cacheability of the content including the new content to server only.

6. A method as defined in claim 1, wherein invoking the delegate associated with the substitution block that generates dynamic content that is included in the chain of response buffers served in a response to the client request further comprises writing the content including the dynamic content to the response sent the client.

7. A method as defined in claim 1, wherein invoking a delegate associated with the substitution block that generates dynamic content that is included in the chain of response buffers served in a response to the client request further comprises inserting the dynamic content in the chain of response buffers in place of the substitution block.

8. In a system that includes a server that serves content to one or more clients from a cache, a method for caching content such that the cached content includes dynamic content that changes for each client request when the cached content is served to a client in response to a client request, the method comprising:
adding a substitution block to a response that is being cached, wherein the substitution block retains a delegate that generates dynamic content; and
storing the response in a cache such that the delegate retained by the substitution block is invoked to produce new dynamic content to be inserted in the response when the response is served from the cache in future client requests.

9. A method as defined in claim 8, further comprising:
receiving a subsequent client request for content that corresponds to the response stored in the cache;
retrieving the response including the substitution buffer from the cache; and
invoking the delegate associated with the substitution buffer to generate the dynamic content that is included in the response to the subsequent client request.

10. A method as defined in claim 9, further comprising serving the response including the dynamic content.

11. A method as defined in claim 9, wherein receiving a subsequent client request for content that corresponds to the response stored in the cache further comprises determining if the content requested in the subsequent client request is stored in the cache.

12. A method as defined in claim 8, further comprising calling the delegate to produce dynamic content that is included in a response to a client.

13. A method as defined in claim 12, further comprising calling the delegate through a user control.

14. A method as defined in claim 12, wherein calling a delegate to produce dynamic content that is included in a response to a client request further comprises calling the delegate through a server control.

15. A method as defined in claim 8, wherein adding a substitution block to a response that is being cached further comprises inserting the substitution buffer in a chain of response buffers, wherein the chain of response buffers corresponds to the response.

16. A computer program product having computer executable instructions for performing the method of claim 8.

17. In a system that includes a server that serves web pages to one or more clients from a cache in response to requests for the web pages from the one or more clients, a method for fully caching a web page such that the web page includes dynamic content when served from the cache, the method comprising:
receiving a request from a client for a web page at a server;
determining if the web page requested by the client is fully cached in a cache of the server;
retrieving a chain of response buffers that corresponds to the web page requested by-the client from the cache, wherein the chain of response buffers includes one or more response buffers and a substitution block;
writing each response buffer in the chain of response buffers to a response served to the client;
when writing the substitution block, invoking a delegate associated with the substitution block to produce dynamic content for the web page that is included in the response to the client in place of the substitution block.

18. A method as defined in claim 17, wherein determining if the web page requested by the client is fully cached in a cache of the server further comprises:
generating the web page; and
storing the web page in the cache as the chain of response buffers.

19. A method as defined in claim 18. wherein storing the web page in the cache further comprises inserting the substitution block in the cached web page.

20. A method as defined in claim 19, further comprising degrading a cacheability of the cached web page to server only such that the web page is not cached at the client.

21. A method as defined in claim 17, wherein retrieving a chain of response buffers that corresponds to the web page requested by the client from the cache further comprises calling the delegate using a user control.

22. A method as defined in claim 17, wherein retrieving a chain of response buffers that corresponds to the web page requested by the client from the cache further comprises calling the delegate using a server control.

23. A method as defined in claim 17, wherein retrieving a chain of response buffers that corresponds to the web page requested by the client from the cache further comprises calling the delegate using an existing server control:

24. A method as defined in claim 17, further comprising serving new dynamic content in the requested web page even if the web page is not stored in the cache.

25. In a system that includes a server that serves content to one or more clients from a cache in response to requests for the content from the one or more clients, a computer program product for implementing a method for fully caching content such that the web page includes dynamic content when served from the cache, the computer program product comprising:
a computer readable medium having computer executable instructions for performing the method, the method comprising:
receiving a request from a client for a web page at a server;
determining if the web page requested by the client is cached in a cache of the server;
retrieving a chain of response buffers that corresponds to the web page requested by the client from the cache, wherein the chain of response buffers includes one or more response buffers and a substitution block;
writing each response buffer in the chain of response buffers to a response served to the client;
when writing the substitution block, invoking a delegate associated to produce dynamic content for the web page that is included in the response to the client.

26. A computer program product as defined in claim 25, further comprising degrading a cacheability of the cached web page to server only such that the web page is not cached at the client.

27. A computer program product as defined in claim 25, wherein retrieving a chain of response buffers that corresponds to the web page requested by the client from the cache further comprises calling the delegate using a user control.

28. A computer program product as defined in claim 25, wherein retrieving a chain of response buffers that corresponds to the web page requested by the client from the cache further comprises calling the delegate using a server control.

29. A computer program product as defined in claim 25, further comprising serving new dynamic content in the requested web page even if the web page is not stored in the cache.
